# FASCICULE DE BREVET EUROPEEN

(11) **EP 4 623 170 B1**
(45) Date de publication et mention de la délivrance du brevet: **30.09.2026**
(21) Numéro de dépôt: 23797787.1
(22) Date de dépôt: 26.10.2023
(51) Int. Cl.: E04H 15/20, B29D 22/02, B29D 23/00

(54) **STRUCTURE GONFLABLE ET PROCEDE DE FABRICATION D'UNE STRUCTURE GONFLABLE**
AUFBLASBARE STRUKTUR UND VERFAHREN ZUR HERSTELLUNG EINER AUFBLASBAREN STRUKTUR
INFLATABLE STRUCTURE AND METHOD FOR PRODUCING AN INFLATABLE STRUCTURE

(30) Priorité: 22.11.2022 FR 2212139
(43) Date de publication de la demande: 01.10.2025
(73) Titulaire: COMPAGNIE GENERALE DES ETABLISSEMENTS MICHELIN, 63000 Clermont-Ferrand (FR)
(72) Inventeur: THIEBEAULD-DE-LA-CROUEE, Pierre-Joseph, 63040 Clermont-Ferrand Cedex 09 (FR); MBIAKOP NGASSA, Armel, 63040 Clermont-Ferrand Cedex 09 (FR); DE-GAYFFIER, Arnaud, 63040 Clermont-Ferrand Cedex 09 (FR)
(74) Mandataire: M.F.P. Michelin
(86) Numéro de dépôt international: PCT/EP2023/079909
(87) Numéro de publication internationale: WO 2024/110146

(56) Documents cités:
- JP-A- 2002 194 925
- US-A1- 2013 305 619
- US-B1- 8 789 549
- US-B2- 9 803 387

## Description

La présente invention se rapporte au domaine des structures gonflables, plus particulièrement du type comportant au moins un boudin gonflable faisant partie de l'ossature des enceintes, abris ou tentes lorsqu'elle est recouverte d'une toile, ou comportant un ou plusieurs boudins gonflables utilisés dans la fabrication des meubles ou des objets flottants.

On connaît dans ce domaine des structures gonflables comprenant une armature comportant des boudins gonflables dans une enveloppe en tissu. Les boudins sont munis de valves de gonflage. Après gonflage, les boudins assurent le raidissement de l'armature. Ces structures sont généralement autoportantes, une fois gonflées elles maintiennent leur forme et supportent des couvrants ou des portes, dans le cas des enceintes ou abris, ou elles supportent des plateaux ou d'autres éléments de mobilier, dans le cas des meubles, tels les tables ou les sièges gonflables.

On obtient un tel boudin tubulaire en enroulant sur lui-même un film en un matériau polymère, puis en reliant les deux bords longitudinaux à l'aide d'une soudure longitudinale pour obtenir un tube ouvert, suivi de deux soudures aux extrémités afin de fermer le tube. Toutefois, du fait de sa fabrication, un tel boudin tubulaire gonflable a tendance à présenter des extrémités galbées. Or, pour un certain nombre d'applications, on préfère un boudin gonflable ayant des extrémités planes afin d'assurer un appui plus stable de la structure qu'il supporte, ainsi qu'un meilleur assemblage du boudin gonflable avec un objet ayant une surface plane, tel un plateau.

On souhaite par ailleurs offrir des fonctionnalités nouvelles à un tel boudin gonflable afin de pouvoir l'utiliser dans différentes structures, et également de faciliter son montage dans la structure ou l'assemblage dont il fait partie.

On connaît du document FR 2584762 des structures gonflables comportant des boudins cylindriques à parois multiples, boudins fermés à leurs extrémités axiales de manière étanche à l'aide d'embouts plans et rigides. Le document FR 2683248 décrit lui, une armature pour structure gonflable comportant deux boudins demi cylindriques qui sont mis l'un contre l'autre sur le côté longitudinal aplati afin de former chacun une chambre à air de sécurité au cas où l'autre chambre à air serait défaillante. Les structures décrites dans ces documents présentent, certes, des boudins gonflables ayant des extrémités planes et une étanchéité renforcée, mais au prix d'une structure complexe qui fait appel à des embouts rigides et parois complexes, voire à un doublement du nombre de boudins. D'autres structures gonflables connues sont par exemple décrites dans US 9803387 B2, JP 2002194925 A, US 2013/305619 A1 et US 8789549 B1.

Un objectif de l'invention est de remédier aux inconvénients des documents précités et d'apporter une solution originale pour la réalisation d'une structure gonflable comportant un boudin gonflable réalisé de manière économique, tout en étant fiable en fonctionnement, permettant d'avoir une bonne stabilité au sol et d'améliorer l'assemblage du boudin gonflable avec d'autres parties de la structure l'intégrant.

Cet objectif est atteint par l'invention qui propose une structure gonflable comprenant un boudin tubulaire gonflable ayant une forme de révolution autour d'un axe central, ledit boudin tubulaire étant réalisé à base d'un film étanche à l'air dont les bords de deux côtés opposés sont réunis à l'aide des moyens d'étanchéité axiaux de sorte qu'un tube est formé lorsque le film est replié sur lui-même et les moyens d'étanchéité axiaux sont assemblés, le tube étant ouvert à ses extrémités axiales, caractérisé en ce que ledit boudin tubulaire comprend des moyens d'étanchéité circonférentiels agencés de sorte qu'une chambre à air externe de section transversale annulaire est formée lorsque le tube est retourné sur lui-même et lorsque les deux extrémités axiales du tube sont assemblées à l'aide des moyens d'étanchéité circonférentiels.

Autrement dit, l'invention propose une structure gonflable pour la construction des abris ou des meubles ou des flotteurs comportant un boudin tubulaire gonflable ayant une forme de révolution, réalisé à base d'un tube souple retourné sur lui-même et fermé, par exemple par soudure, collage, etc. à l'aide de moyens d'étanchéité circonférentiels situés à un seul endroit par exemple à l'une de ses extrémités axiales, l'extrémité opposée étant, elle, déjà fermée en étant constituée par la courbure des parois du tube qui a été retourné sur lui-même. Par une opération de retournement d'un tube souple sur lui-même on comprend une opération lors de laquelle l'une des extrémités transversales du tube est entraînée en un mouvement de translation pour qu'elle glisse le long du tube, à l'intérieur de celui-ci, en direction de l'autre extrémité axiale maintenue fixe jusqu'à ce que les deux extrémités axiales se situent au même niveau (on comprend qu'elles se trouvent sensiblement dans un même plan vertical qui est perpendiculaire à la direction longitudinale du tube). On obtient ainsi, un boudin tubulaire de section transversale annulaire et dont la longueur a été divisée par deux par rapport à la longueur du tube initial. En fermant de manière étanche les extrémités axiales l'une contre l'autre, on obtient ainsi une chambre à air de section annulaire.

Ainsi, il a été constaté que la surface des extrémités axiales de la chambre à air ainsi obtenue n'était plus un dôme, comme dans les boudins gonflables de l'état de la technique, qui sont des boudins cylindriques fermés à chacune des leurs deux extrémités axiales, mais une couronne, ce qui s'avère avantageux lors de l'assemblage avec une surface plane et qui présente un meilleur appui plan.

On arrive ainsi à obtenir une chambre à air dont les surfaces des extrémités axiales sont des couronnes, et cela en partant d'un film souple ou d'un tube souple et minimisant les opérations d'assemblage par soudure, par collage, etc. qui sont grandes consommatrices de temps et impliquent des coûts élevés en main d'œuvre. Par ailleurs, le volume d'une telle chambre à air tubulaire étant légèrement moindre que celui d'un tube plein, son gonflage se fait plus rapidement.

Un autre avantage d'une telle chambre à air de section annulaire est qu'elle est vide en partie centrale, ce qui lui permet d'y intégrer d'autres moyens et/ou fonctions.

Ledit film peut être transparent. Par film transparent on comprend un film transparent à la lumière visible. Ceci permet de rendre visible l'intérieur du boudin tubulaire à travers le film transparent qui renferme la chambre à air externe.

Ladite chambre à air externe peut entourer un espace interne ouvert à au moins l'une de ses extrémités axiales.

Ledit espace interne peut être apte à recevoir un organe de support.

Ledit espace interne peut être apte à recevoir un dispositif électrique.

Ladite chambre à air externe peut entourer un espace interne qui peut être fermé de manière étanche à l'air de manière à former une chambre à air interne.

Ladite chambre à air externe et ladite chambre à air interne peuvent être gonflables de manière indépendante.

Ledit film peut être un film à base de polyuréthane ou un tissu enduit de polyuréthane.

L'objectif de l'invention est également atteint avec un procédé d'assemblage d'une structure tubulaire gonflable comprenant un boudin tubulaire gonflable, ayant une forme de révolution autour d'un axe central, comprenant:
- une étape de confection d'un tube réalisé à base d'un film étanche à l'air, le tube étant formé lorsque le film est replié sur lui-même et les bords du film sont assemblés à l'aide de moyens d'étanchéité axiaux, le tube étant ouvert à ses extrémités axiales, et
- une étape de confection d'une chambre à air externe de section transversale annulaire qui est formée lorsque le tube est retourné sur lui-même et lorsque les deux extrémités axiales du tube sont assemblées à l'aide des moyens d'étanchéité circonférentiels.

Dans une variante du procédé, on peut introduire au moins un organe de support et/ou d'éclairage à l'intérieur d'un espace interne ouvert à au moins l'une de ses extrémités transversales, ledit espace interne étant délimité par ladite chambre à air externe.

Dans une autre variante de réalisation du procédé de l'invention, on peut fermer de manière étanche ledit espace intérieur de manière à former une chambre à air interne.

Ledit film peut être un film à base de polyuréthane ou d'un tissu enduit de polyuréthane et l'assemblage desdits moyens d'étanchéité peut se faire par une soudure HF.

L'invention sera mieux comprise grâce à la suite de la description, qui s'appuie sur les figures suivantes :
la figure 1 est une vue schématique en perspective d'un tube utilisé pour fabriquer le boudin tubulaire de la structure gonflable de l'invention;
la figure 2 est une vue schématique en perspective d'un boudin tubulaire de la structure gonflable de l'invention ;
la figure 3 est une vue en coupe axiale et la figure 4 est une vue en perspective d'une structure gonflable selon une première variante de réalisation de l'invention ;
la figure 5 est une vue en coupe axiale et la figure 6 est une vue en perspective d'une structure gonflable selon une deuxième variante de réalisation de l'invention.

Sur les différentes figures, les éléments identiques ou similaires portent la même référence. Leur description n'est donc pas systématiquement reprise.

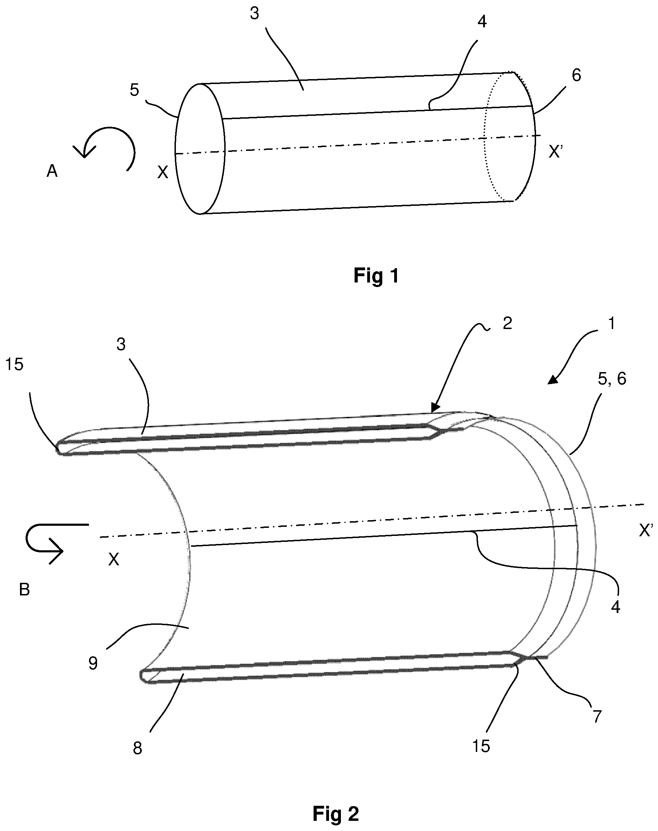

La structure gonflable 1 de l'invention comprend un boudin tubulaire 2 gonflable (fig. 2) réalisé à base d'un film étanche à l'air par des opérations successives de confection et d'assemblage, tel qu'il sera décrit dans ce qui suit.

Le boudin tubulaire 2 selon l'invention présente une forme sensiblement cylindrique de section annulaire autour d'un axe de révolution X-X'. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution X-X' du boudin tubulaire.

Par direction circonférentielle, on entend la direction qui est sensiblement perpendiculaire à la fois à la direction axiale et à un rayon du boudin tubulaire (en d'autres termes, tangente à un cercle dont le centre est sur l'axe de révolution X-X' du boudin tubulaire).

Par direction radiale, on entend la direction selon un rayon du boudin tubulaire, c'est-à-dire une direction quelconque coupant l'axe de révolution X-X' du boudin et sensiblement perpendiculaire à cet axe.

Ainsi, les moyens d'étanchéité ou les parties de la structure qui prennent l'orientation de l'une de ces directions seront nommés en fonction de cette direction.

Sur la figure 1 on a représenté par une vue en perspective simplifiée un tube 3 souple à partir duquel on réalise un boudin tubulaire 2, tel que représenté à la figure 2. Le tube 3 est réalisé en un film étanche à l'air, de préférence à partir d'un rectangle découpé dans une bobine de film souple et dont les bords opposés du rectangle sont pliés, tel que représenté par la flèche A, puis assemblés par des moyens d'étanchéité axiaux 4. Par moyens d'étanchéité axiaux 4 on comprend un assemblage étanche à l'air, s'étendant dans la direction axiale, des deux bords opposés du rectangle découpé préalablement dans le film étanche à air. Un tel assemblage peut être réalisé par exemple par soudure ou par collage des bords du rectangle en les rabattant et les superposant légèrement (sur quelques mm) en vue de leur assemblage. On obtient ainsi un tube 3 souple, ouvert à ses deux extrémités axiales 5 et 6. Dans une variante, le tube peut être obtenu directement par extrusion.

Le matériau du tube 3 est par exemple un film thermoplastique à base de polyuréthane ou d'un tissu enduit de polyuréthane. Les différentes parties du film sont assemblées par exemple par soudure haute fréquence (soudure HF). L'épaisseur du film utilisé pour fabriquer le tube 3 est comprise entre 100 et 300 µm, de préférence comprise entre 100 et 160 µm.

Un tel film peut être par exemple un film polyuréthane éther PLATILON ^{®} 4201AU ou PLATILON ^{®} U4201 NU, transparent, ou encore un tissu nylon enduit polyuréthane deux faces TPU 2012 de la marque PASCON^{®}.

Selon l'invention, on obtient le boudin tubulaire 2 en retournant le tube 3 sur lui-même, dans la direction représentée par la flèche B de la figure 2. Plus précisément, on prend une première extrémité axiale 5 du tube 3 et on la fait glisser à l'intérieur de ce dernier jusqu'à ce qu'elle arrive au niveau de la deuxième extrémité axiale 6. Lorsque les deux extrémités axiales 5 et 6 se rejoignent, on les assemble à l'aide des moyens d'étanchéité circonférentiels 7 et on obtient ainsi une chambre à air externe 8 de section transversale annulaire. Par moyens d'étanchéité circonférentiels 7 on comprend un assemblage étanche à l'air, réalisé par exemple par soudure ou par collage, en direction circonférentielle, des deux extrémités axiales 5 et 6 du tube 4, l'une sur l'autre. Les moyens d'étanchéité circonférentiels 7 représentent la partie de connexion ou d'assemblage des extrémités axiales 5 et 6, leurs parties terminales étant superposées sur quelques mm sur leur pourtour, à l'endroit où l'on effectue une soudure selon la direction circonférentielle. Les moyens d'étanchéité circonférentiels 7 ainsi réalisés permettent de fermer de manière étanche à l'air la chambre à air externe 8. On munit la chambre à air externe 8 ainsi obtenue d'une valve de gonflage (non représentée sur les dessins) du type connu par l'homme du métier. Le boudin tubulaire 2 une fois gonflé (fig. 2) présente ainsi une forme de cylindre creux, l'espace interne 9 est libre en étant délimité par la chambre à air externe 8. On observe ainsi que les surfaces des extrémités axiales 15 du boudin tubulaire 2 ainsi obtenu ont une forme de couronne circulaire, ce qui permet une meilleure assise plane du boudin.

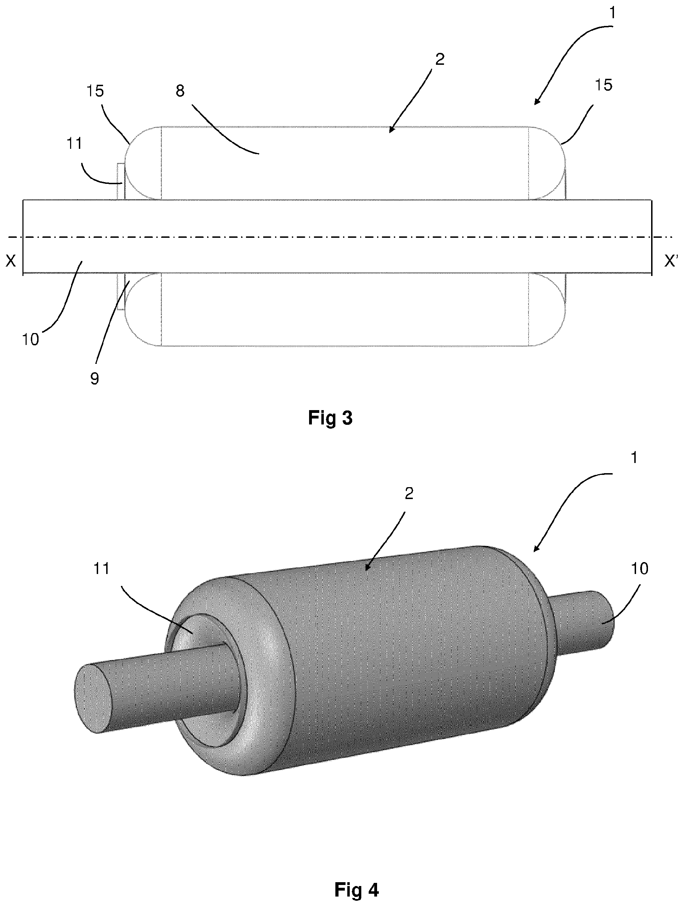

Les figures 3 et 4 illustrent une première variante de réalisation d'une structure gonflable selon l'invention. La structure gonflable 1 comprend un boudin tubulaire 2 du type précédemment décrit, en référence à la figure 2, dans lequel un organe de support 10 rigide, par exemple un axe ou une tige, est inséré dans l'espace interne 9 de manière à traverser le boudin. L'espace interne 9 est délimité par la chambre à air externe 8 et est fermé à l'une des extrémités par une paroi 11 de protection de l'espace interne 9. La paroi peut être réalisée en un même matériau que celui du boudin tubulaire 2.

Une structure gonflable selon la variante des figures 3 et 4 peut ainsi mieux être supportée et montée au sein d'un ensemble, tel un meuble, pour constituer, par exemple, un appui tête, un appui bras, voire une assise ou une partie de celle-ci.

Dans une autre variante, non illustrée dans les dessins, l'organe de support 10 est remplacé par un dispositif électrique, tel un câble de connexion ou un câble lumineux, par exemple à LED. Dans une autre variante on remplace l'organe de support 10 par un faisceau de fibres de verre. Dans encore une autre variante, on introduit à l'intérieur de l'espace interne 9 au moins un organe de support et au moins un dispositif électrique.

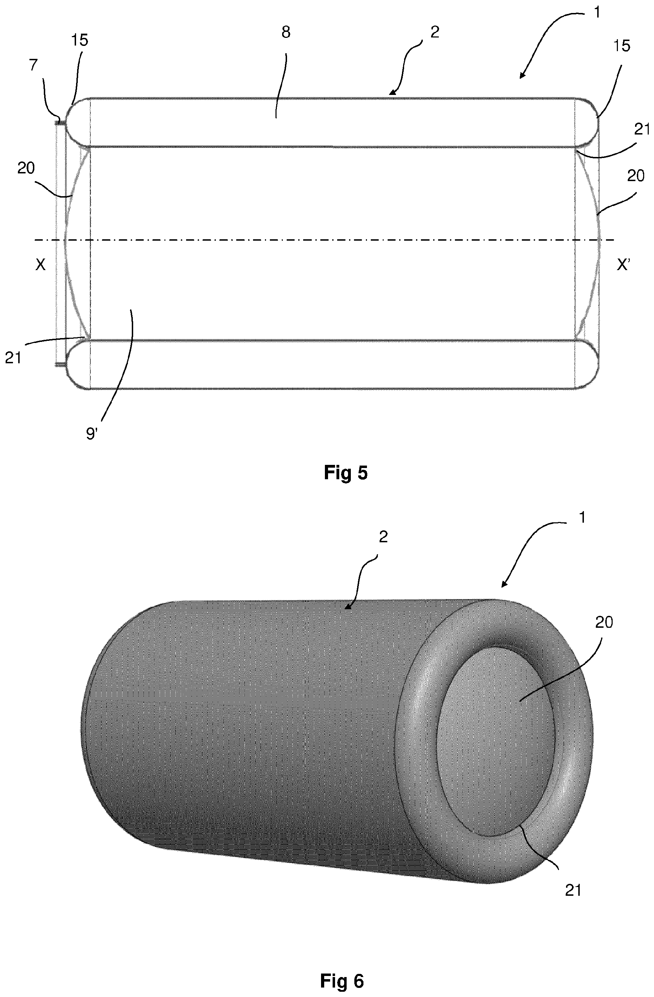

Les figures 5 et 6 illustrent une deuxième variante de réalisation d'une structure gonflable selon l'invention. La structure gonflable 1 comprend un boudin tubulaire 2 du type précédemment décrit, en référence à la figure 2, dans lequel l'espace interne 9 est fermé de manière étanche aux environs des deux extrémités axiales 15 du boudin tubulaire. Plus précisément, une paroi 20 est assemblée de manière étanche à chaque extrémité axiale 15 du boudin tubulaire 2. Une telle paroi 20 peut être réalisée dans un même matériau que celui du boudin tubulaire et assemblée par une soudure 21 de type soudure HF à la paroi interne du boudin tubulaire 2.

On obtient ainsi une chambre à air interne 9' étanche délimitée par la paroi interne de la chambre à air externe 8 et les parois 20 d'extrémité. Chacune des chambres à air peut être munie d'une valve de gonflage et être gonflée de manière indépendante, l'une par rapport à l'autre. On obtient ainsi une structure gonflable comportant deux chambres à air distinctes dans laquelle la chambre à air interne 9' constitue un compartiment gonflable de sécurité lorsque la chambre à air externe 8 est endommagée et se dégonfle. Cela permet à la structure gonflable de maintenir globalement sa forme en cas de perte d'air dans l'une des chambres.

Une structure gonflable selon la variante des figures 5 et 6 peut ainsi être utilisée dans la construction des meubles telles une table d'appoint ou un mange-debout, voire un tabouret. Une telle structure peut également constituer une poutre de construction sécuritaire utilisée par exemple dans la construction d'une enceinte gonflable.

A titre d'exemple, on gonfle la chambre à air externe 8 et la chambre à air interne 9' à une même pression qui est d'environ 0,2 bar. Dans une variante, la pression de gonflage a des valeurs différentes dans la chambre à air interne et dans la chambre à air externe.

La structure gonflable des figures 5 et 6 peut, dans une variante non représentée aux dessins, être recouverte d'une enveloppe en tissu, par exemple du DACRON ^{®}, par exemple pour des raisons de design ou de protection.

Dans encore une autre variante, l'enveloppe est munie de bandes autoagrippantes ou de type VELCRO ^{®}, cousues sur cette dernière en vue de l'assemblage avec une structure gonflable voisine.

D'autres variantes et modes de réalisation de l'invention peuvent être envisagés dans le cadre de l'invention telle que revendiquée.

## Revendications

1. Structure gonflable (1) comprenant un boudin tubulaire (2) gonflable ayant une forme de révolution autour d'un axe central (X-X'), ledit boudin tubulaire (2) étant réalisé à base d'un film étanche à l'air dont les bords de deux côtés opposés sont réunis à l'aide de moyens d'étanchéité axiaux (4) de sorte qu'un tube (3) est formé lorsque le film est replié sur lui-même et les moyens d'étanchéité axiaux (4) sont assemblés, le tube étant ouvert à ses extrémités axiales (5, 6), **caractérisé en ce que** ledit boudin tubulaire comprend des moyens d'étanchéité circonférentiels (7) agencés de sorte qu'une chambre à air externe (8) de section transversale annulaire est formée lorsque le tube (3) est retourné sur lui-même et lorsque les deux extrémités axiales (5) et (6) du tube (3) sont assemblées à l'aide desdits moyens d'étanchéité circonférentiels (7).

2. Structure selon la revendication 1, **caractérisée en ce que** ledit film est transparent.

3. Structure selon l'une des revendications précédentes, **caractérisée en ce que** ladite chambre à air externe (8) entoure un espace interne (9) ouvert à au moins l'une de ses extrémités axiales.

4. Structure selon la revendication précédente, **caractérisée en ce que** l'espace interne (9) est apte à recevoir un organe de support.

5. Structure selon l'une des revendications 3 ou 4, **caractérisée en ce que** l'espace interne (9) est apte à recevoir un dispositif électrique.

6. Structure selon l'une des revendications 1 ou 2, **caractérisée en ce que** ladite chambre à air externe (8) entoure un espace interne (9) qui est fermé de manière étanche à l'air de manière à former une chambre à air interne (9').

7. Structure selon la revendication précédente, **caractérisée en ce que** ladite chambre à air externe (8) et ladite chambre à air interne (9') sont gonflables de manière indépendante.

8. Structure selon l'une des revendications précédentes, **caractérisée en ce que** ledit film est un film à base de polyuréthane ou un tissu enduit de polyuréthane.

9. Procédé d'assemblage d'une structure gonflable (1) comprenant un boudin tubulaire (2) gonflable, ayant une forme de révolution autour d'un axe central (X-X'), comprenant :
- une étape de confection d'un tube (3) réalisé à base d'un film étanche à l'air, le tube étant formé lorsque le film est replié sur lui-même et les bords du film sont assemblés à l'aide de moyens d'étanchéité axiaux (4), le tube étant ouvert à ses extrémités axiales (5, 6), et
- une étape de confection d'une chambre à air externe de section transversale annulaire qui est formée lorsque le tube (3) est retourné sur lui-même et lorsque les deux extrémités axiales (5) et (6) du tube (3) sont assemblées à l'aide des moyens d'étanchéité circonférentiels (7).

10. Procédé selon la revendication précédente, **caractérisé en ce que** l'on introduit au moins un organe de support (10) et/ou un dispositif électrique à l'intérieur d'un espace interne (9) ouvert à au moins l'une de ses extrémités axiales, ledit espace interne étant délimité par ladite chambre à air externe (8).

11. Procédé selon la revendication précédente, **caractérisé en ce que** l'on ferme de manière étanche ledit espace interne (9) de manière à former une chambre à air interne (9').

12. Procédé selon l'une des revendications 9 à 11, **caractérisé en ce que** ledit film est un film à base de polyuréthane ou d'un tissu enduit de polyuréthane et **en ce que** l'assemblage desdits moyens d'étanchéité se fait par une soudure HF.

## Patentansprüche

1. Aufblasbare Struktur (1), umfassend einen aufblasbaren rohrförmigen Strang (2) mit einer um eine Mittelachse (X-X') rotationssymmetrischen Form, wobei der rohrförmige Strang (2) auf Basis einer luftdichten Folie ausgeführt ist, deren Ränder von zwei entgegengesetzten Seiten mithilfe von axialen Abdichtungsmitteln (4) verbunden sind, so dass ein Rohr (3) gebildet wird, wenn die Folie auf sich selbst umgefaltet wird und die axialen Abdichtungsmittel (4) zusammengefügt werden, wobei das Rohr an seinen axialen Enden (5, 6) offen ist, **dadurch gekennzeichnet, dass** der rohrförmige Strang umfängliche Abdichtungsmittel (7) umfasst, die so angeordnet sind, dass eine äußere Luftkammer (8) ringförmigem Querschnitt gebildet wird, wenn das Rohr (3) auf sich selbst umgeschlagen wird und wenn die beiden axialen Enden (5) und (6) des Rohrs (3) mithilfe der umfänglichen Abdichtungsmittel (7) zusammengefügt werden.

2. Struktur nach Anspruch 1, **dadurch gekennzeichnet, dass** die Folie transparent ist.

3. Struktur nach einem der vorhergehenden Ansprüche, **dadurch gekennzeichnet, dass** die äußere Luftkammer (8) einen an mindestens einem seiner axialen Enden offenen Innenraum (9) umgibt.

4. Struktur nach dem vorhergehenden Anspruch, **dadurch gekennzeichnet, dass** der Innenraum (9) zur Aufnahme eines Stützelements geeignet ist.

5. Struktur nach einem der Ansprüche 3 oder 4, **dadurch gekennzeichnet, dass** der Innenraum (9) zur Aufnahme einer elektrischen Vorrichtung geeignet ist.

6. Struktur nach einem der Ansprüche 1 oder 2, **dadurch gekennzeichnet, dass** die äußere Luftkammer (8) einen Innenraum (9) umgibt, der luftdicht verschlossen ist, so dass eine innere Luftkammer (9') gebildet wird.

7. Struktur nach dem vorhergehenden Anspruch, **dadurch gekennzeichnet, dass** die äußere Luftkammer (8) und die innere Luftkammer (9') unabhängig aufblasbar sind.

8. Struktur nach einem der vorhergehenden Ansprüche, **dadurch gekennzeichnet, dass** die Folie eine Folie auf Polyurethanbasis oder ein mit Polyurethan beschichtetes Gewebe ist.

9. Verfahren zum Zusammenfügen einer aufblasbaren Struktur (1), die einen aufblasbaren rohrförmigen Strang (2) mit einer um eine Mittelachse (X-X') rotationssymmetrischen Form umfasst, umfassend:
- einen Schritt des Herstellens eines Rohrs (3), das auf Basis einer luftdichten Folie ausgeführt ist, wobei das Rohr gebildet wird, wenn die Folie auf sich selbst umgefaltet wird und die Ränder der Folie mithilfe von axialen Abdichtungsmitteln (4) zusammengefügt werden, wobei das Rohr an seinen axialen Enden (5, 6) offen ist, und
- einen Schritt des Herstellens einer äußeren Luftkammer mit ringförmigem Querschnitt, die gebildet wird, wenn das Rohr (3) auf sich selbst umgeschlagen wird und wenn die beiden axialen Enden (5) und (6) des Rohrs (3) mithilfe der umfänglichen Abdichtungsmittel (7) zusammengefügt werden.

10. Verfahren nach dem vorhergehenden Anspruch, **dadurch gekennzeichnet, dass** mindestens ein Stützelement (10) und/oder eine elektrische Vorrichtung in das Innere eines an mindestens einem seiner axialen Enden offenen Innenraums (9) eingeführt wird, wobei der Innenraum durch die äußere Luftkammer (8) begrenzt wird.

11. Verfahren nach dem vorhergehenden Anspruch, **dadurch gekennzeichnet, dass** der Innenraum (9) dicht verschlossen wird, so dass eine innere Luftkammer (9') gebildet wird.

12. Verfahren nach einem der Ansprüche 9 bis 11, **dadurch gekennzeichnet, dass** die Folie eine Folie auf Polyurethanbasis oder ein mit Polyurethan beschichtetes Gewebe ist und dass das Zusammenfügen der Abdichtungsmittel durch ein HF-Schweißen erfolgt.

## Claims

1. Inflatable structure (1) comprising an inflatable tubular stiffening member (2) having a shape of revolution about a central axis (X-X'), said tubular stiffening member (2) being made from an airtight film the edges of which on two opposite sides are joined using axial sealing means (4) such that a tube (3) is formed when the film is folded up on itself and the axial sealing means (4) are assembled, the tube being open at its axial ends (5, 6), **characterized in that** said tubular stiffening member comprises circumferential sealing means (7) arranged such that an outer air chamber (8) of annular cross section is formed when the tube (3) is turned back on itself and when the two axial ends (5) and (6) of the tube (3) are assembled using said circumferential sealing means (7).

2. Structure according to Claim 1, **characterized in that** said film is transparent.

3. Structure according to either of the preceding claims, **characterized in that** said outer air chamber (8) surrounds an inner space (9) which is open at at least one of its axial ends.

4. Structure according to the preceding claim, **characterized in that** the inner space (9) is adapted to receive a support member.

5. Structure according to either of Claims 3 and 4, **characterized in that** the inner space (9) is adapted to receive an electrical device.

6. Structure according to either of Claims 1 and 2, **characterized in that** said outer air chamber (8) surrounds an inner space (9) which is closed airtightly in such a way as to form an inner air chamber (9').

7. Structure according to the preceding claim, **characterized in that** said outer air chamber (8) and said inner air chamber (9') are inflatable independently.

8. Structure according to one of the preceding claims, **characterized in that** said film is a polyurethane-based film or a polyurethane-coated fabric.

9. Method of assembling an inflatable structure (1) comprising an inflatable tubular stiffening member (2), having a shape of revolution about a central axis (X-X'), comprising:
- a step of making a tube (3) made from an airtight film, the tube being formed when the film is folded up on itself and the edges of the film are assembled using axial sealing means (4), the tube being open at its axial ends (5, 6), and
- a step of making an outer air chamber of annular cross section which is formed when the tube (3) is turned back on itself and when the two axial ends (5) and (6) of the tube (3) are assembled using the circumferential sealing means (7).

10. Method according to the preceding claim, **characterized in that** at least one support member (10) and/or electrical device is placed inside an inner space (9) which is open at at least one of its axial ends, said inner space being delimited by said outer air chamber (8).

11. Method according to the preceding claim, **characterized in that** said inner space (9) is closed sealingly in such a way as to form an inner air chamber (9').

12. Method according to one of Claims 9 to 11, **characterized in that** said film is a polyurethane-based film or a polyurethane-coated fabric and **in that** the assembly of said sealing means is carried out by HF welding.
